# EUROPÄISCHE PATENTANMELDUNG

(11) **EP 0 621 551 A2**
(43) Veröffentlichungstag der Anmeldung: **26.10.1994**
(21) Anmeldenummer: 94106043.6
(22) Anmeldetag: 19.04.1994
(51) Int. Cl.: G06K 7/06

(54) **Kartenleser**

(30) Priorität: 21.04.1993 DE 4312993
(71) Anmelder: ddm hopt + schuler GmbH & Co. KG., D-78628 Rottweil (DE)
(72) Erfinder: Metzger, Hans, D-78652 Deisslingen (DE); Rapp, Hans-Jochen, D-78628 Rottweil (DE)
(74) Vertreter: KOHLER SCHMID + PARTNER

(57) **Zusammenfassung**

Kartenleser mit einer Vorrichtung zum Festhalten einer in den Kartenleser einschiebbaren Karte in derjenigen Position, in der der Informationsaustausch zwischen Karte und Kartenleser stattfindet, wobei die Karte in der Position des Informationsaustausches durch ein Reibrichtgesperre, dessen Klemmhebel insbesondere als Daumenhebel ausgebildet ist, gehalten ist. Dabei werden ein im Gehäuse hin- und herbeweglicher Schieber und die auf ihm aufliegende Karte zum Informationsaustausch auf einen gehäusefesten Kontaktträger abgesenkt und durch das Reibrichtgesperre in dieser Lage gehalten.

## Beschreibung

Die Erfindung bezieht sich auf einen Kartenleser mit einer Vorrichtung zum Festhalten einer in den Kartenleser einschiebbaren Karte in derjenigen Position, in der der Informationsaustausch zwischen Karte und Kartenleser stattfindet.

Ein derartiger Kartenleser ist aus der DE-OS 39 31 508 bekannt geworden.

Der bekannte Kartenleser enthält ein Gehäuse, einen Schieber und einen in dem Gehäuse angeordneten Kontaktträger. In diesen Kartenleser kann eine Informationen in Form einer einen integrierten Schaltkreis tragende Karte mit Kontaktflächen auf ihrer Oberfläche eingeführt werden, über die der Informationsaustausch mit dem Kartenleser erfolgt. Der Schieber ist in dem Kartenleser derart hin- und herbeweglich gelagert, daß eine Karte beim Einführen in den Kartenleser auf dem Schieber zum Aufliegen kommt und dann bei ihrem weiteren Einschieben von diesem geführt auf den Kontaktträger in ihre Endlage abgesenkt wird. Bei dem bekannten Kartenleser ist an seinem Gehäuse eine Vorrichtung zum Festhalten einer in den Kartenleser einschiebbaren Karte in Form einer Kartenbremse vorgesehen, deren einzige offenbarte Ausführungsform aus einer U-förmigen Federklammer besteht. Diese Klammer kommt unmittelbar mit der Karte in Eingriff und hält die Karte in der Position fest, in der der Informationsaustausch zwischen Karte und Kartenleser erfolgt. Denn bevor die Karte beim Einschieben in den Kartenleser ihre Endlage erreicht hat, übt die bekannte Klammer eine derartige Kraft auf die Kartenoberfläche aus, daß die Einschiebebewegung der Karte durch die auf die Kartenoberfläche ausgeübte Reibung abgebremst wird und die auf die Karte auszuübende Einschubkraft entsprechend vergrößert werden muß, um die Karte bis in ihre Endlage einführen zu können.

Bei der bekannten Vorrichtung zum Festhalten einer Karte übt die bekannte Klammer ihre größte Kraft auf die Karte aus, bevor diese ihre Endposition erreicht hat. Daher nimmt ein die Karte einschiebender Benutzer plötzlich einen merklichen, ein weiteres Einschieben der Karte stark hemmenden Widerstand wahr, was der Benutzer irrtümlich dahingehend interpretieren kann, daß die Karte bereits ihre Endstellung erreicht hat, und somit zu einer Fehlbedienung Anlaß geben kann. Außerdem führt die schon weit vor Erreichen der Endlage einsetzende Reibung zwischen Klammer und Kartenbremse zu einer unnötigen Materialabnutzung ihrer Oberflächen. Auch ist es von Nachteil, daß die Ausbildung der Klammer in dem Kartenleser zu einer übermäßig hohen Bauhöhe des Kartenlesers führt, weil die für die federnde Klammer erforderliche Vorspannung durch entsprechend hohe Ausführungen der sie bildenden Bauteile aufgebracht werden muß.

Der Erfindung liegt daher die Aufgabe zugrunde, einen Kartenleser der eingangs genannten Art mit einer benutzerfreundlicheren Festhaltevorrichtung bei verringerter Materialabnutzung und Bauhöhe des Kartenlesers weiterzubilden.

Diese Aufgabe wird erfindungsgemäß dadurch gelöst, daß die Karte in der Position des Informationsaustausches durch ein Reibrichtgesperre, dessen Klemmhebel insbesondere als Daumenhebel ausgebildet ist, gehalten ist.

Die erfindungsgemäße Ausbildung eines Kartenleser mit einem Reibrichtgesperre hat den wesentlichen Vorteil, daß das Reibrichtgesperre auf die Oberfläche einer Karte bei ihrem Einschieben in den Kartenleser keine Oberflächenreibung ausübt. Durch das Reibrichtgesperre wird auf die Oberfläche der Karte ein sich steigernder Druck ausgeübt, mit der die Karte auf ein im Gehäuse ortsfestes Gegenlager gedrückt wird. Die Reibung zwischen Karte und Gegenlager steigt mit dem Anpreßdruck, den das Reibrichtgesperre auf die Karte ausübt, sodaß dem Einschieben der Karte ein ansteigender Widerstand entgegengesetzt wird. Der Benutzer wird die Karte also soweit in den Kartenleser einschieben, bis die Karte ihre beispielsweise durch im Kartenleser angeordnete Anschläge definierte Endposition eingenommen hat. In dieser Endlage wirkt die größte auf die Karte ausgeübte Kraft des Reibrichtgesperres, und die Karte ist in dieser Endposition sicher fixiert. Die niedrige Ausführung des Reibrichtgesperres reduziert einerseits die Bauhöhe des Kartenlesers, andererseits wird dadurch auch die dem Reibrichtgesperre ausgesetzte Kartenoberfläche klein gehalten. Bei einem Daumenhebel ist durch die spezielle Krümmung seines auf der Karte angreifenden Klemmarms gewährleistet, daß die Wirkungslinie der von dem Reibrichtgesperre auf die Kartenoberfläche ausgeübten Kraft während des gesamten Klemmvorgangs immer senkrecht zur Kartenoberfläche verläuft und somit die Anpreßkraft des Reibrichtgesperres ohne Verluste zum Anpressen der Karte auf das Gegenlager genutzt wird.

Ist der Klemmhebel im wesentlichen L-förmig ausgebildet, also mit einem langen und einem kurzen Arm, so kann vorteilhafterweise der eine auf der Karte aufsetzende Arm mit entsprechender Krümmung ausgebildet sein, während über den anderen Arm die Drehachse des Klemmhebels und damit auch die Hebelwirkung beeinflußbar ist.

Beispielsweise kann ein kurzer auf der Kartenoberfläche abrollbarer Arm des Klemmhebels mit einer Abrollkante ausgebildet sein, so daß beim Klemmvorgang nur diese Abrollkante auf der Kartenoberfläche aufsetzt und zunächst die Drehachse des Klemmhebels auf der Kartenoberfläche bildet. Dieser Arm kann dann entsprechend klein dimensioniert werden, um den Drehweg möglichst geringzuhalten.

Wenn ein langer Arm des Klemmhebels an seinem Ende halbzylinderförmig ausgebildet ist, kann die Hebelwirkung des Klemmhebels während des Klemmvorganges sehr einfach durch Hebelarmverlängerung vergrößert werden, dadurch daß die Drehachse des Klemmhebels so geführt wird, daß sie während eines Teils des Klemmvorgangs durch das halbzylinderförmige Ende des Klemmhebels gebildet ist.

Damit die Drehachse des Klemmhebels verschiebbar ist, weist dieser vorteilhafterweise an seinen Seitenflächen vorstehende Zapfen auf, über die der Klemmhebel drehbar und/oder verschiebbar geführt ist.

In einer Ausführungsform der Erfindung ist die Drehachse des Klemmhebels verschiebbar. Die Drehachse des Klemmhebels kann dann beispielsweise so geführt sein, daß die Wirkungslinie der von dem Reibrichtgesperre auf die Karte ausgeübten Kraft auch dann senkrecht verläuft, wenn der Klemmhebel nicht als Daumenhebel ausgebildelt ist.

Wenn die Zapfen an dem auf der Karte aufsetzenden Ende des langen Arms des Klemmhebels angeordnet sind, so ist selbst dann eine sichere Führung des Klemmhebels gegeben, wenn sich die Drehachse des Klemmhebels verschiebt.

Vorteilhafterweise sind die Führungen für den Klemmhebel im Schieber angeordnet, denn dann ist der Schieber bei einem Defekt leichter als das Gehäuse auswechselbar und, da er auch mit einfacheren und weniger Komponenten als das Gehäuse ausgebildet ist, kostengünstiger zu ersetzen.

Da der Schieber eine im wesentlichen waagerechte Bewegung durchführt, reicht es aus, wenn die Führungen für die Zapfen des Klemmhebels im Schieber nur senkrecht verlaufen, um die Drehachse innerhalb des Klemmhebels beliebig waagerecht und senkrecht verschieben zu können.

Wenn die Führungen an ihrem der Kartenbahn gegenüberliegenden Ende offen sind, so ist bei einer Funktionsstörung des Klemmhebels dieser leicht aus seiner Führung herausnehmbar und austauschbar.

Wenn die Karte erst durch eine im letzten Einschiebeabschnitt erfolgende Absenkbewegung zum Informationsaustausch auf den Kontaktträger abgesenkt ist, wird eine überflüssige Reibung der Kontakte des Kartenlesers auf der Kartenoberfläche vermieden und die Materialabnutzung beider Oberflächen auf ein Minimum reduziert.

In besonders bevorzugten Ausführungsformen ist in der Bahn des mit dem Schieber bewegten Klemmhebels für diesen am Gehäuse neben einem die Endstellung des Klemmhebels definierenden Anschlag auch ein Führungsabschnitt vorgesehen. Über diesen Führungsabschnitt kann die Wirkung des Reibrichtgesperres besonders einfach gesteuert werden. Insbesondere kann das Reibrichtgesperre erst auf einem Abschnitt, kurz bevor der Schieber bzw. die Karte ihre Endstellung erreicht haben, ausgelöst werden. Außerdem kann dieser Führungsabschnitt vorteilhaft auch dazu genutzt werden, den Klemmhebel mit wenig Spiel in seiner Führung zu sichern und seine Ruhestellung zu definieren.

Um den Klemmhebel auch während einer Absenkbewegung des Schiebers sicher führen zu können, weist der Führungsabschnitt in Einschieberichtung der Karte auf einem ersten zur Kartenbahn weisenden Abschnitt vorteilhafterweise mindestens eine zur Kartenbahn geneigte Schrägfläche auf, deren Steigung insbesondere der der Führungsschlitze für den Schieber am Gehäuse entspricht.

Wenn sich erfindungsgemäß in weiterer Einschieberichtung der Karte auf einem zweiten zur Kartenbahn weisenden Abschnitt des Führungsabschnittes in der Position, in der der Klemmhebel beim Informationsaustausch steht, eine Aussparung anschließt, in die ein Arm des Klemmhebels eingreift, so ist diese Aussparung bevorzugt halbzylinderförmig auszubilden. Dies erlaubt dann dem von der Kartenoberfläche während des Klemmvorganges wegweisenden Ende des Klemmhebels, ohne Reibung in der Aussparung abzurollen.

Ist der Führungsabschnitt in einer gehäusefesten Zungenfeder angeordnet, so übernimmt vorteilhafterweise diese Zungenfeder während eines Teil oder während des gesamten Klemmvorganges die auf die Karte auszuübende Kraft, so daß die Lager des Klemmhebels während des gesamten Klemmvorgangs kräftefrei bleiben. Durch entsprechende Dimensionierung der Zungenfeder kann zusätzlich noch die Anpreßkraft des Reibrichtgesperres auf die Karte varriert werden.

Wenn in weiteren Ausgestaltungen ein Arm des Klemmhebels in seiner Ausgangsstellung in Aussparungen am Schieber anliegt und insbesondere die Auflageflächen der Aussparungen mit einer in Einschieberichtung der Karte ansteigenden Schräge ausgebildet sind, so zeichnet sich diese Ruhestellung des Klemmhebels dadurch aus, daß bereits eine minimale Drehung des Klemmhebels genügt, um die Wirkung des Reibrichtgesperres auszulösen.

Eine weitere Erfindungsausführung ist dadurch gekennzeichnet, daß in der Ruhestellung des Klemmhebels die Auflageflächen der Aussparungen höher über der Kartenbahn angeordnet sind als Auflageflächen für die Zapfen des Klemmhebels. Auf diese Weise wird sehr leicht eine auf einen Arm des Klemmhebels wirkende Kraft in Einschieberichtung in eine Drehung des Klemmhebels umgesetzt werden.

In einer anderen Ausführungsform der Erfindung ist die Drehachse des Klemmhebels ortsfest. Beispielsweise über die vorzugsweise an dem langen Arm des Klemmhebels angeordneten Zapfen kann der Klemmhebel drehbar im Gehäuse des Kartenlesers gelagert sein. Dies hat den Vorteil, insbesondere wenn der Klemmhebel als Daumenhebel ausgebildet ist, daß die Wirkungslinie der von dem Reibrichtgesperre auf die Karte ausgeübten Kraft immer senkrecht zur Kartenebene verläuft.

Wenn an den Seitenflächen des Klemmhebels im Bereich der Abrollkante des kurzen Arms jeweils mindestens eine Aussparung derart vorgesehen ist, daß an den beiden äußeren Enden der Stirnseite des kurzen Arms jeweils ein Absatz gebildet ist, so kann in einfacher Weise über diese Absätze das Eingreifen des Klemmhebels in die Kartenbahn bewirkt, also das Reibrichtgesperre ausgelöst werden.

In einer bevorzugten Ausführungsform ist am Gehäuse ein Führungsabschnitt vorgesehen, der vorteilhafterweise dazu dient, den Klemmhebel mit der erforderlichen Anpreßkraft auf die Kartenoberfläche einwirken zu lassen. Weist der Führungsabschnitt auf einem ersten zur Kartenbahn weisenden Abschnitt eine von der Kartenbahn wegweisende geneigte Schrägfläche auf und schließt sich in weiterer Einschieberichtung eine bevorzugt etwa viertelzylinderförmige Aussparung tangential an, so rollt der Klemmhebel über seinen langen Arm in der Aussparung ab, d.h., die Drehachse des Klemmhebels liegt in der Aussparung. Durch die versetzte Anordnung der Zapfen bezüglich dem Ende des langen Arms in Richtung auf den kurzen Arm des Klemmhebels sind die Zapfen des Klemmhebels und ihre Führungen am Gehäuse kräftefrei gelagert. Werden beispielsweise die Lager für die Zapfen des Klemmhebels als an einem Ende offene Führungen ausgebildet, so ist der Klemmhebel aufgrund der Schrägfläche des Führungsabschnittes in den Führungen gehalten, und somit sind zu seiner Sicherung im Gehäuse keine weiteren Teile notwendig. Der Klemmhebel kann dann besonders leicht in die Führungen eingelegt bzw. aus ihnen entnommen werden, wenn der Führungsabschnitt in einer gehäusefesten Zungenfeder federnd angeordnet ist.

In besonders bevorzugter Ausführungsform weist der Schieber für die Absätze des Klemmhebels Auflageflächen auf, die sich von seinem hinteren Ende aus in den Schieber erstrecken. Diese Auflageflächen bilden dann Gleitflächen für den Klemmhebel, wenn der Schieber relativ zum Gehäuse und somit auch zum Klemmhebel verschoben wird. Vorteilhafterweise beenden Aussparungen im Schieber die Auflageflächen, sodaß der Klemmhebel auf der Kartenoberfläche angreifen kann und das Reibrichtgesperre leicht über mit dem Klemmhebel zusammenwirkende Anschläge des Schiebers ausgelöst werden kann.

In weiterer Ausgestaltung der Erfindung besteht das Gegenlager auf der dem Reibrichtgesperre gegenüberliegenden Seite aus einem Werkstoff mit höherem Oberflächenreibwert als die Kartenoberfläche. Wenn die Karte ihre Ensposition beispielsweise durch Absenkung erreicht hat und auf dem Gegenlager mit der vom Reibrichtgesperre auf ihre Oberfläche ausgeübten Kraft aufliegt und fixiert ist, so ist die einem Herausziehen der Karte entgegenwirkende Kraft umso größer, je höher der Oberflächenreibwert des Gegenlagers ist.

Besteht die Oberfläche des Gegenlagers aus einem Elastomer, so ist trotz eines hohen Oberflächenreibwertes auch die Elastizität gegeben, den auf die Karte durch das Reibrichtgesperre ausgeübten Druck aufzunehmen. Die Kartenoberfläche wird auf diese Weise geschont. Außerdem ist es bei entsprechender Ausbildung des Gegenlagers möglich, dieses leicht auszutauschen.

Die einzelnen Merkmale der Erfindung können für sich allein oder in beliebiger Kombination verwirklicht sein.

Weitere Vorteile ergeben sich aus der Beschreibung und der Zeichnung.

Die Erfindung ist in drei Ausführungsbeispielen in der Zeichnung dargestellt und wird in der nachfolgenden Beschreibung näher erläutert. Es zeigt:
- **Fig. 1**: die Unterseite des Gehäuses des Kartenlesers;
- **Fig. 2a**: eine Seitenansicht des Gehäuses mit eingeschobener, Karte, wobei die eingeschobene Karte die Stellung des Informationsaustausches noch nicht erreicht hat;
- **Fig. 2b**: eine Seitenansicht des Gehäuses mit eingeschobener, Karte, wobei die eingeschobene Karte in der Stellung des Informationsaustausches durch das Reibrichtgesperre festgehalten ist;
- **Fig. 3**: einen vergrößerten Teilschnitt durch das Gehäuse des Kartenlesers nach der Linie III-III der Fig. 1;
- **Fig. 4**: den der Fig. 3 entsprechenden Teil der Oberseite des Gehäuses des Kartenlesers;
- **Fig. 5**: eine vergrößerte Frontansicht des Gegenlagers;
- **Fig. 6**: eine Draufsicht auf den Schieber des Kartenlesers;
- **Fig. 7**: einen Teilschnitt durch den Schieber des Kartenlesers nach der Linie VII-VII der Fig. 6;
- **Fig. 8**: eine vergrößerte Frontansicht des Klemmhebels;
- **Fig. 9**: eine Seitenansicht des Klemmhebels in Pfeilrichtung IX der Fig. 8;
- **Fig. 10**: schematisch dargestellte Teile des Kartenlesers in einem der Fig. 2a entsprechenden Längsschnitt durch den Kartenleser;
- **Fig. 11**: schematisch dargestellte Teile des Kartenlesers in einem der Fig. 2b entsprechenden Längsschnitt durch den Kartenleser.
- **Fig. 12**: einen der Fig. 3 entsprechenden Teilschnitt durch das Gehäuse in einem zweiten Ausführungsbeispiel;
- **Fig. 13**: eine der Fig. 6 entsprechende Teildraufsicht auf den Schieber des Kartenlesers im zweiten Ausführungsbeispiel;
- **Fig. 14**: einen Teilschnitt durch den Schieber des Kartenlesers nach der Linie XIV-XIV der Fig. 13;
- **Fig. 15**: eine vergrößerte Frontansicht des Klemmhebels im zweiten Ausführungsbeispiel;
- **Fig. 16**: eine Seitenansicht des Klemmhebels in Pfeilrichtung XV der Fig. 15;
- **Fig. 17**: schematisch dargestellte Teile des Kartenlesers in einem der Fig. 2a entsprechenden Längsschnitt durch den Kartenleser im zweiten Ausführungsbeispiel;
- **Fig. 18**: schematisch dargestellte Teile des Kartenlesers in einem der Fig. 2b entsprechenden Längsschnitt durch den Kartenleser in dem zweiten Ausführungsbeispiel;
- **Fig. 19**: eine Teildraufsicht auf das Gehäuse in einem dritten Ausführungsbeispiels;
- **Fig. 20**: einen der Fig. 19 entsprechenden Teilschnitt des Kartenlesers nach der Linie XX-XX der Fig. 19, wobei die eingeschobene Karte die Stellung des Informationsaustausches noch nicht erreicht hat, und
- **Fig. 21**: einen Fig. 20 entsprechenden Teilschnitt, wobei die eingeschobene Karte in der Stellung des Informationsaustausches durch eine Sperrklinke festgehalten ist.

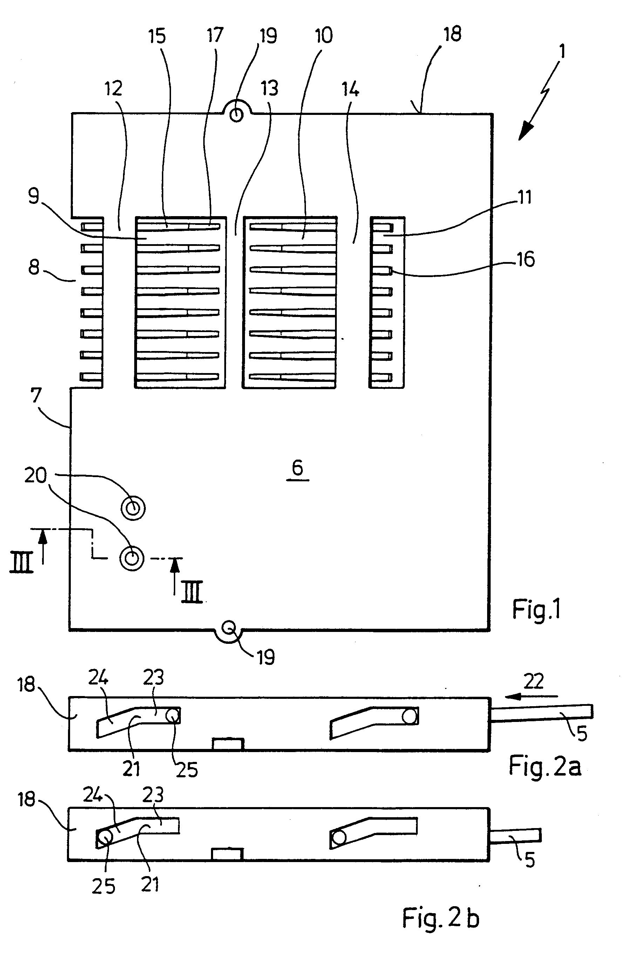

Bei der in den Fign. 1 bis 11 der Zeichnung dargestellten Ausführungsform der Erfindung weist der Kartenleser zwei Hauptteile, nämlich ein Gehäuse 1 und einen im Gehäuse 1 verschiebbar angeordneten Schieber 2 auf, sowie einen Klemmhebel 3 und zwei Stempel 4. In den Kartenleser kann eine Informationen in Form eines integrierten Schaltkreises tragende Karte 5 eingeführt werden. Der Klemmhebel 3 ist im Schieber 2 gelagert und bildet zusammen mit dem Gehäuse eine Ausführungsform des erfindungsgemäßen Reibrichtgesperres des Kartenlesers. Die beiden Stempel 4 sind am Boden 6 des Gehäuses 1 angeordnet und bilden das Gegenlager für den Teil der Karte 5, auf den das Reibrichtgesperre einwirkt. Bevorzugt sind Gehäuse 1, Schieber 2 und Klemmhebel 3 aus Kunststoff gefertigt.

Die in Fig. 1 gezeigte Unterseite des Gehäuse 1 des Kartenlesers weist einen im wesentlichen rechteckigen Boden 6 auf, dessen hinteres Ende 7 mit einer Aussparung 8 versehen ist. An diese Aussparung 8 schließen sich drei rechteckige Durchbrüche 9, 10, 11 an, sodaß drei parallele Stege 12, 13, 14 gebildet werden. Bezüglich der Mittellinie des schmaleren Steges 13 ist der Durchbruch 9 zu der Aussparung 8 bzw. der Durchbruch 10 zu dem Durchbruch 11 symmetrisch ausgebildet. An dem Steg 12 bzw. 14 ist eine erste bzw. eine zweite Reihe von Kontaktfedern 15 auf nicht gezeigte Weise befestigt, die die Kontakte für den Informationsaustausch mit den Kontaktflächen einer eingeschobenen Karte 5 bilden. Im Bereich des Durchbruches 9 bzw. der Aussparung 8 weisen die Kontaktfedern 15 eine rechtwinklige Abwinkelung 16 auf, sodaß die abgewinkelten Schenkel der Kontaktfedern 15 über die Außenfläche des Gehäusebodens 6 hinausragen. Ausgehend von dem Steg 12 bzw. 14 verlaufen die Kontaktfedern 15 parallel zum Gehäuseboden 6 und sind an ihren Spitzen jeweils mit einer ins Gehäuseinnere weisenden Kuppe 17 ausgebildet, die über die Innenfläche des Gehäusebodens 6 herausragt und über die der Informationsaustausch mit den Kontaktflächen der Karte 5 erfolgt. An den beiden Seitenwänden 18 des Gehäusebodens 6 ist je ein Durchbruch 19 in Form eines Loches ausgebildet, das als Befestigungsmittel für den Kartenleser dient. Im Eckbereich des hinteren Endes 7 des Gehäusebodens 6 sind zwei Durchbrüche 20 in Form eines Loches ausgebildet.

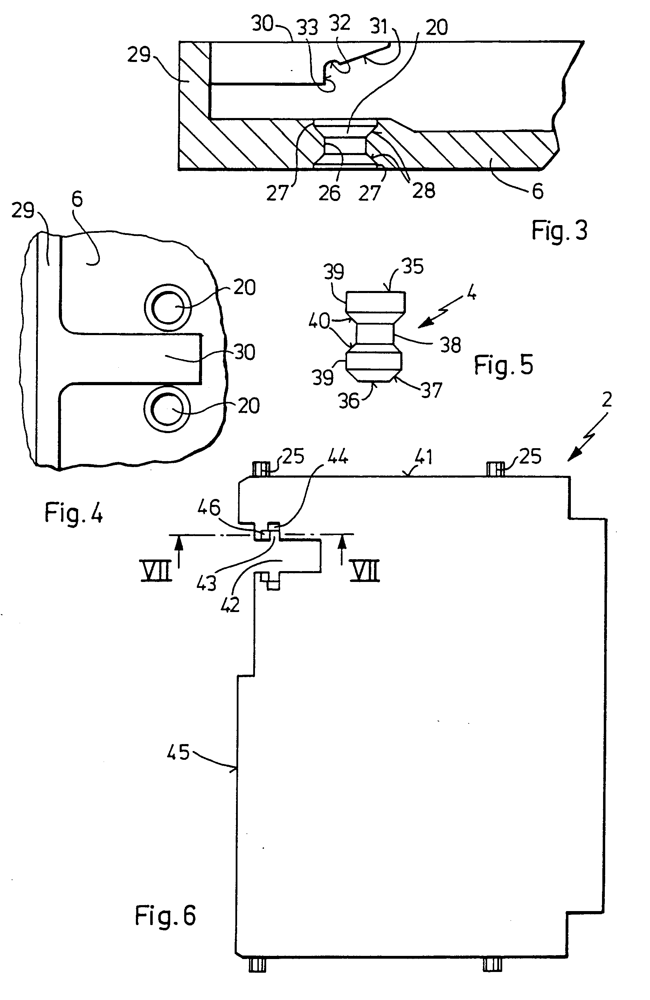

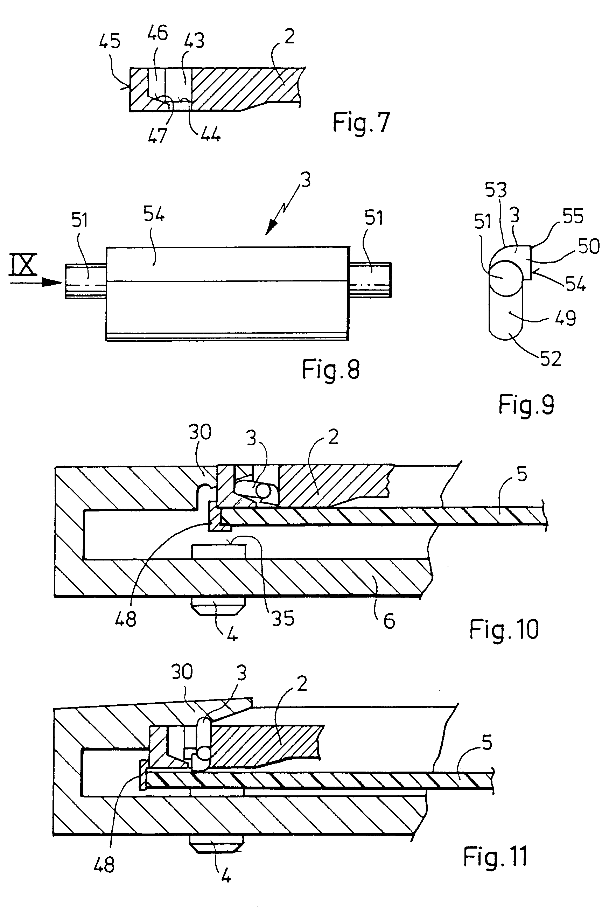

Die Fign. 2a und 2b zeigen, wie die Absenkbewegung einer eingeschobenen Karte 5 erfolgt. In den beiden Seitenwänden 18 des Gehäuses 1 sind je zwei Führungsschlitze 21 ausgebildet. Sie weisen in Einschieberichtung 22 der Karte 5 zunächst einen waagerechten Abschnitt 23 und dann einen dem Gehäuseboden 6 zugewandten schrägen Abschnitt 24 auf. In diese Führungsschlitze 21 greifen am Schieber 2 angeordnete Zapfen 25 (Fig. 6) ein. Wird eine Karte 5 in Einschieberichtung 22 in den Kartenleser eingeführt, so gleitet sie in dem Schieber, bis das vordere Ende der Karte 5 auf einen in die Kartenbahn hineinragenden Anschlag 48 (Fign. 10, 11) trifft. Die Karte 5 schiebt den Schieber 2 zunächst über die waagerechten Führungsbschnitte 23 für seine Zapfen 25 nach hinten. Wenn die Zapfen 25 in die schrägen Abschnitte 24 gelangen, wird der Schieber 2 zusammen mit der aufliegenden Karte 5 nach unten abgesenkt.

Die beiden Löcher 20 im Gehäuseboden 6 weisen jeweils einen axialen Innenabschnitt 26 geringeren Durchmessers als auf ihren Außenabschnitten 27 auf (Fig. 3) und die Übergangsflächen 28 zwischen dem Innenabschnitt 26 und den Außenabschnitten 27 verlaufen konisch. Von der Rückwand 29 des Gehäuses 1 erstreckt sich ein parallel zum Gehäuseboden 6 verlaufender Vorsprung 30 ins Innere des Gehäuses 1. Dieser Vorsprung 30 ist gemäß den Fign. 3 und 4 einteilig so aus dem Gehäuse herausgearbeitet, daß er eine gehäusefeste Federzunge bildet. Diese Zunge 30 weist an ihrer der Kartenbahn zugewandten Seite auf einem ersten Abschnitt eine Führungsschräge 31 auf, deren Neigung im wesentlichen parallel zu der des schrägen Abschnitts 24 des Führungsschlitzes 21 verläuft. An diese Führungsschräge schließt sich auf einem zweiten Abschnitt eine halbzylinderförmige Aussparung 32 an, die durch einen senkrecht zur Kartenbahn verlaufenden Anschlag 33 abgeschlossen wird.

In den Löchern 20 wird je ein aus einem Elastomer bestehender Stempel 4 gehalten (Fig. 5). Dieser Stempel 4 ist im wesentlichen ein runder Zylinder, der an seiner einen, der Kartenbahn zugewandten Stirnfläche 35 mit einer ebenen Auflagefläche und an seiner zweiten Stirnfläche 36 mit einer konischen Außenfläche 37 ausgebildet ist. Der Stempel 4 weist einen axialen Innenabschnitt 38 geringeren Durchmessers als seine beiden axialen Außenabschnitte 39 auf, deren Übergang durch konische Umfangsflächen 40 gebildet wird und wobei der axiale Innenabschnitt 38 des Stempels 4 mit dem Innenabschnitt 26 der Löcher 20 korrespondiert.

Der über seine in die Führungsschlitze 24 eingreifenden Zapfen 25 hin- und herbeweglich im Gehäuse 1 angeordnete Schieber 2 ist um mindestens die waagerechte Länge der Führungsschlitze 24 kürzer als das Gehäuse 1 ausgebildet (Fig. 6). An seiner der Rückwand 29 des Gehäuses 1 zugewandten Rückwand 45 des Schiebers 2 ist eine mit der Zunge 30 des Gehäuses 1 im wesentlichen korrespondierende Aussparung 42 an der Stelle vorgesehen, an der die Zunge 30 in die Bahn des Schiebers 2 hineinragt. Dabei sind Breite und Länge der Aussparung 42 größer als die der Zunge 30 des Gehäuses 1 gewählt, so daß die Bewegung des Schiebers 2 im Gehäuse 1 durch die Zunge 30 nicht behindert wird.

Die Aussparung 42 wird durch zwei sich jeweils rechtwinklig an die Längsseiten der Aussparung 42 anschließende Aussparungen 43 in den Schieber 2 fortgeführt, an die sich je eine zur Längsseite 41 des Schiebers 2 verlaufende erste Vertiefung 44 und eine zur Rückseite 45 des Schiebers 2 weisende zweite Vertiefung 46 anschließt. Diese zweite Vertiefung 46 ist mit einer in Einschieberichtung der Karte 3 abfallenden Schrägfläche 47 ausgebildet (Fig. 7).

In nicht gezeigter Weise sind weiterhin an der Vorderseite des Schiebers 2 ein eine Karte 5 aufnehmendes Mundstück und an den Längsseiten 41 des Schiebers 2 Führungsabschnitte ausgebildet, sodaß eine Karte 5 bei ihrem Einschieben in den Kartenleser in dem Schieber 2 geführt wird. Wie in Fign. 10 und 11 gezeigt ist, beenden an der Rückseite 45 des Schiebers 2 ausgebildete Anschläge 48 die Führung der Karte 5 im Schieber 2.

Die Aussparungen 42, 43 und die Vertiefungen 44, 46 dienen zur Aufnahme des Klemmhebels 3. Der Klemmhebel 3 weist einen langen Schenkel 49 und einen im rechten Winkel zum langen Schenkel 49 angeordneten kurzen Schenkel 50 auf. An seinen Seitenflächen weist der Klemmhebel je einen vorstehenden runden Zapfen 51 auf, wobei die Zapfen 51 an dem dem kurzen Schenkel 50 benachbarten Ende des langen Schenkels 49 angeordnet sind. Das eine Ende 52 des langen Schenkels 49 ist halbzylinderförmig ausgebildet, während sein anderes Ende mit einer Rundung 53 in den kurzen Arm 50 des Klemmhebels 3 übergeht. Der kurze Schenkel 50 endet mit einer Stirnfläche 54, deren Außenkante als Abrollkante 55 dient.

Die ersten Vertiefungen 44 am Schieber 2 bilden die Auflager für die Zapfen 51 und sind nach oben offen, so daß der Klemmhebel 3 neben einer Drehbewegung auch höhenverschiebbar gelagert ist. In der Ruhestellung liegt der Klemmhebel 3 mit seinen Außenkanten des langen Schenkels 49 auf den Schrägflächen 47 der zweiten Vertiefungen 46 des Schiebers 2 auf. Die Stirnfläche 54 des kurzen Schenkels 50 verläuft dann im wesentlichen parallel zur Kartenbahn, so daß der kurze Schenkel 50 nicht in die Kartenbahn hineinragt. Weiterhin übergreift in der Ruhestellung des Klemmhebels 3 der schräge erste Führungsabschnitt 31 der gehäusefesten Zunge 30 den langen Schenkel 49 des Klemmhebels 3 auf einem Teilabschnitt. Wenn der Schieber 2 relativ zum Gehäuse 1 verschoben wird, ragt die Zunge 30 noch weiter in die Aussparung 42 hinein, sodaß der Klemmhebel 3 in jeder Stellung des Schiebers 2 von einem Teil des Führungsabschnittes der Zunge 30 übergriffen und so gegen Herausfallen aus den Aussparungen 42, 44, 46 gesichert wird. Zum Ein- und Ausbau des Klemmhebels 3 aus dem Schieber wird die federnde Zunge 30 angehoben, und der Klemmhebel kann in die Aussparungen 42, 44, 46 eingelegt bzw. aus dem Schieber 2 herausgenommen werden

Das Einführen einer Karte 5 läßt sich in vier Abschnitte unterteilen:
Im ersten Abschnitt befinden sich der Schieber 2 und der Klemmhebel 3 in ihrer Ausgangposition. Wenn eine Karte 5 in den Kartenleser eingeschoben wird, so gleitet sie zunächst in dem Schieber 2 auf seinen Führungsschienen ohne Reibung in den Kartenleser hinein. Dabei bewegt sich der Schieber 2 gegenüber dem Gehäuse 1 nicht. Dieser erste Einschiebeabschnitt ist abgeschlossen, wenn das Einschieben der Karte 5 in den Schieber 2 durch die in der Kartenbahn an seiner Rückwand 45 angeordnete Anschläge 48 des Schiebers 2 beendet wird (Fig. 10). Der Klemmhebel 3 liegt dabei wie oben beschrieben so auf den Schrägflächen 47 der ersten Vertiefungen 44 des Schiebers 2 auf, daß er nicht in die Kartenbahn hineinragt.

Bei weiterem Karteneinschub werden dann Karte 5 und Schieber 2 gemeinsam in das Gehäuse 1 eingeschoben, wobei der Schieber 2 mit der auf ihm aufliegenden Karte 5 in den waagerechten Abschnitten 23 der Seitenwände 18 des Gehäuses 1 geführt wird.

Spätestens wenn das äußere Ende 52 des langen Schenkels 49 an dem schrägen Führungsabschnitt 31 der Zunge 30 anschlägt, beginnt der dritte Einschiebeabschnitt. Dabei wird der Schieber 2 und die auf ihm aufliegende Karte 5 durch die schrägen Abschnitte 24 der Führungsschlitze 21 in den Seitenwänden 18 des Gehäuses 1 in Richtung auf den Kontaktträger abgesenkt. Da die Neigung des schrägen ersten Führungsabschnittes der des schrägen Abschnittes 24 der Führungsschlitze 21 entspricht, behindert der lange Schenkel 49 die weitere Längsbewegung des Schiebers 2 nicht. Bei der Absenkbewegung setzt die Karte auf den beiden das Gegenlager bildenden Stempeln 4 auf.

Im vierten der Einschiebebewegung ist der Schieber 2 und die auf ihm aufliegende Karte 5 soweit abgesenkt, daß die Wirkung des Reibrichtgesperres ausgelöst wird (Fign. 10 und 11). Das äußere Ende 52 des langen Schenkels 49 des Klemmhebels 3 schlägt bei der schrägen Absenkbewegung an dem Anschlag 33 des Führungsabschnittes der Zunge 30 an. Da die Auflageflächen 47 für den langen Schenkel 49 des Klemmhebels 3 schräg ausgebildet sind und die Auflageflächen der zweiten Vertiefungen 44 für die Zapfen 51 bezüglich der Kartenbahn tiefer liegen, wird bei weiterem Einschieben der Karte 5 ein Drehmoment auf den Klemmhebel 3 ausgeübt. Der Klemmhebel 3 beginnt sich aufzurichten, wobei das Ende 52 des langen Schenkels 49 in die halbzylindrische Aussparung 32 des Führungsabschnittes der Zunge 30 eingreift.

Alternativ kann diese anfängliche Drehbewegung des Klemmhebels 3 auch dadurch ausgelöst bzw. zusätzlich unterstützt werden, wenn die Neigung des schrägen ersten Führungsabschnittes 31 der Zunge 30 etwas steiler als die des schrägen Abschnittes 24 der Führungsschlitze 24 ausgebildet ist. Dann wird das äußere Ende 52 des langen Schenkels 49 nicht parallel zur Führungsschräge 31 abgesenkt, sondern stößt an dieser Führungsschräge der Zunge 30 an. Dann kann je nach der Stärke der Federkraft der Zunge 30 entweder nur der mittlere Abschnitt des Klemmhebels 3 bzgl. seiner auf den Auflageflächen der zweiten Vertiefungen 44 aufliegenden Zapfen 51 niedergedrückt werden, oder aber die Zunge 30 selbst wird angehoben. Beides übt auf den Klemmhebel eine nach oben gerichtete Kraft aus, so daß das Ende des Klemmhebels 52, wenn er die zylindrische Aussparung 32 erreicht, eine Aufwärtsbewegung durchführt, die zu einer Drehbewegung des Klemmhebels 3 führt bzw. diese zusätzlich unterstützt.

Da die Federkraft der Zunge 30 einem weiteren Aufrichten des Klemmhebels 3 entgegenwirkt, erfordert ein weiteres Einschieben der Karte 3 eine ansteigende Kraft, um den Klemmhebel 3 entgegen der Zunge aufzurichten. Dabei wird die Zunge 30 aus ihrer Ruhelage um einen kleinen Winkel herausgedreht (Fig.11).

Auf der Karte 5 rollt der kurze Schenkel 50 des Klemmhebels 3 über seine Abrollkante 55 und die sich anschließende Rundung 53 ab. Da die Zapfen 51 versetzt zur Abrollkante 55 und zur Rundung 53 angeordnet sind, liegt der Klemmhebel 3 bei seiner Drehbewegung mit seinem kurzen Schenkel 50 auf der Karte 5 und mit seinem langen Schenkel 49 in der zylinderförmigen Aussparung 32 auf, nicht aber die Zapfen 51 auf ihren Auflageflächen 44. Die Zapfen 51 heben während der Drehbewegung von ihren Auflageflächen 44 ab, und beide bleiben so während des gesamten Drehvorganges kräftefrei und unterliegen daher keinem Verschleiß.

Mit Beginn der Absenkbewegung setzt die Karte 5 auf den Stirnflächen 35 der Stempel 4 auf und wird unter ansteigendem Anpreßdruck auf diesen entlanggeschoben.

Der Einschiebevorgang ist beendet, wenn das weitere Einschieben des Schiebers 2 durch Anschläge gegrenzt wird, beispielweise durch Anschläge an der Rückwand 29 des Gehäuses 1 oder wenn die Führungsstifte 25 das Ende ihres schrägen Führungsschlitzes 24 erreichen.

Es ist noch darauf hinzuweisen, daß der auf der Karte 5 aufliegende Arm 50 des Klemmhebels 3 anstatt mit einer Abrollkante 55 auch eine gekrümmte Abrollfläche, beispielsweise die eines Daumenhebels, aufweisen kann. Dann kann die Drehbewegung des Klemmhebels 3 durch Abrollen dieser Abrollfläche auf der Kartenoberfläche infolge der Relativbewegung von Karte 5 und Klemmhebel 3 unterstützt oder gar ausgelöst werden.

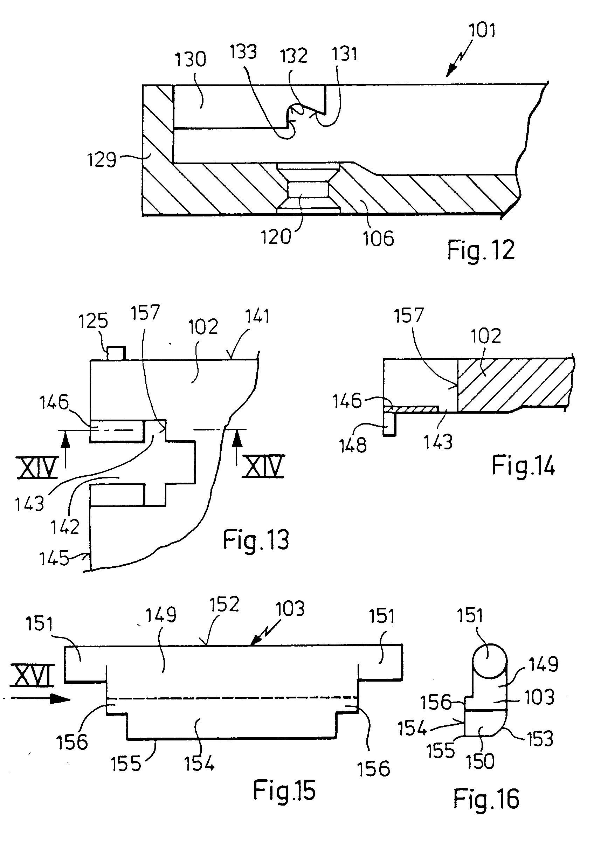

In einem weiteren, in den Figuren 12 bis 18 gezeigten Ausführungsbeispiel der Erfindung unterscheidet sich das Gehäuse 101 des Kartenlesers von dem Gehäuse 1 des ersten Ausführungsbeispiels durch eine abgeänderte Ausbildung der Federzunge 130. Die Federzunge 130 erstreckt sich von der Rückwand 129 des Gehäuses 101 als ein parallel zum Gehäuseboden 106 verlaufender Vorsprung ins Innere des Gehäuses 101. Die einteilig aus dem Gehäuse herausgearbeitete Zunge 130 weist an ihrer der Kartenbahn zugewandten Seite auf einem ersten Abschnitt eine Führungsschräge 131 auf, deren Steigung das entgegengestzte Vorzeichen der Steigung des ersten Ausführungsbeispiels aufweist, sodaß der Abstand zur Kartenbahn in Einschieberichtung zunimmt. Die Führungsschräge 131 mündet tangential in eine in etwa viertelzylinderförmige Aussparung 132. Der Führungsabschnitt der Zunge 130 wird durch einen senkrecht zur Kartenbahn verlaufenden Anschlag 133 abgeschlossen. Dem Führungsabschnitt 131, 132, 133 gegenüber sind am Gehäuseboden 106 ein oder mehrere Löcher 120 ausgebildet, in denen zur Bildung des Gegenlagers jeweils ein Stempel 4 gehalten wird.

Der Schieber 102 weist an seinem hinteren Ende eine rechtwinklige Aussparung 142 auf, die durch jeweils eine weitere Aussparung 143 in Richtung auf die Seitenwände 141 des Schiebers 102 fortgeführt wird. Der zwischen dem hinteren Ende 145 des Schiebers 102 und der Aussparung 143 befindliche Teil des Schiebers 102 weist eine geringere Dicke als der übrige Teil des Schiebers 104, insbesondere als die Anschlagflächen 157, auf, sodaß dadurch jeweils eine Auflagefläche 146 gebildet wird.

Der Klemmhebel 103 unterscheidet sich von dem des ersten Ausführungsbeispiels einerseits dadurch, daß seine runden Führungszapfen 151 mit dem halbzylinderförmigen Ende des langen Schenkels 149 zusammenfallen, und andererseits dadurch, daß die Stirnfläche 154 des kurzen Schenkels 150 derart gestuft ist, daß zu beiden Seiten des Klemmhebels 103 jeweils ein Absatz 156 gebildet wird. Die Breite des Klemmhebels 103 ist dabei so gewählt, daß er mit seinen Schenkeln 149, 150 in die Aussparung 142 eingelegt werden kann, wobei die Absätze 156 des Klemmhebels 103 auf den Auflageflächen 146 aufliegen. Die Breite der Federzunge 130 wird zweckmäßigerweise so gewählt, daß sie über die beiden Auflageflächen 146 ragt. Sie kann aber auch auf einen breiteren oder weniger breiten Abschnitt des Klemmhebels 103 einwirken.

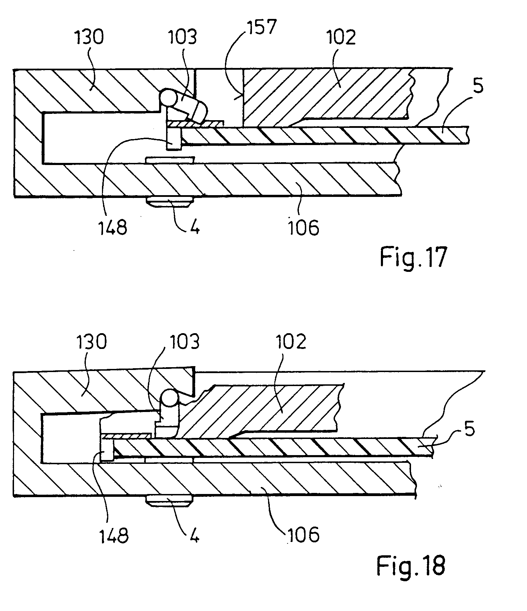

Fig. 17 zeigt die Ruhestellung des Klemmhebels 103, wobei eine Karte 5 innerhalb des Schiebers 102 bereits bis zu Anschlägen 148 des Schiebers 102 eingeschoben wurde. Der Klemmhebel 103 ist über die Rundung des Endes 152 seines langen Schenkels 149 in dem Führungsabschnitt 131, 132, 133 drehbar, aber unverschiebbar auf nicht gezeigte Weise im Gehäuse, insbesondere in der Kartenzunge 130 selbst, gelagert. In seiner Ruhestellung greift der Klemmhebel 103 nicht in die Kartenbahn ein, sondern liegt mit den Absätzen 156 seiner Stirnseite 154 auf den Auflageflächen 146 des Schiebers 102 auf. Da die Auflageflächen 146 des Schiebers 102 unterhalb des Führungsabschnittes 131, 132, 133 angeordnet sind, ist dem Klemmhebel 103 eine Schräglage vorgegeben. Die Führungsschräge 131 weist eine der Schrägstellung des langen Schenkels 149 des Klemmhebels 103 in seiner Ruhelage entsprechende Neigung auf.

Werden Schieber 102 und Karte 5 gemeinsam weiter in das Innere des Kartenlesers eingeschoben, so gleiten die Absätze 156 des Klemmhebels 103 auf den Auflageflächen 146 des Schiebers. Wenn bei weiterem Einschieben das Absenken von Karte 5 und Schieber 102 erfolgt, so senkt sich auch der kurze Schenkel 150 des Klemmhebels 103 entsprechend ab, sodaß dies eine Drehung des Klemmhebels 103 zur Folge hat. Bei weiterem Einschieben des Schiebers 102 in den Kartenleser werden den Absätzen 156 des Klemmhebels 103 durch die Aussparungen 143 die Auflageflächen genommen, sodaß der Klemmhebel 103 infolge einer zusätzlichen Drehung mit seiner Abrollkante 155 auf der Kartenoberfläche zum Aufliegen kommt. Wenn die Rundung 153 des Klemmhebels 103 an der Wand 157 des Schiebers 102 zum Anliegen kommt, so bewirkt das weitere Einschieben des Schiebers 102 eine Drehbewegung des Klemmhebels 103, sodaß sich dieser entgegen der Federkraft der Federzunge 130 aufrichtet. Die Drehbewegung des Klemmhebels 103 ist beendet, wenn der lange Schenkel 149 des Klemmhebels 103 an der Wand 157 des Schiebers 102 anliegt.

Abschließend ist noch darauf hinzuweisen, daß durch die versetzte Anordnung der Zapfen 151 bezüglich des Endes des langen Schenkels 149 auch bei diesem Ausführungsbeispiel sowohl die Zapfen 151 des Klemmhebels 103 als auch die diese Zapfen 151 aufnehmenden Gegenlager kräftefrei ausgebildet werden können. Selbstverständlich ist es nicht erforderlich, daß der Klemmhebel 103 direkt mit der Kartenoberfläche zusammenwirkt. Beispielsweise kann anstelle der Aussparungen 142, 143 auch ein Boden vorgesehen sein, dessen Dicke so gewählt ist, daß der von dem Klemmhebel 103 augeübte Druck auf die Karte durch die elastische Verformung des Bodens weitergeleitet wird. Weiterhin kann die Drehbewegung des Klemmhebels 103 auch für andere Hebel- und Stellmechanismen genutzt werden.

Soll der Klemmhebel 103 in diesem Ausführungsbeispiel nicht nahe der Rückwand 129 des Gehäuses 101, sondern näher zur Einschuböffnung des Kartenlesers hin angeordnet werden, so erstrecken sich die Aussparungen 142, 143 und die Auflageflächen 146 entsprechend weit in den Schieber 102 hinein. Die Federzunge 130 ist an entsprechender Stelle auf der Oberseite des Gehäuses 101 auszubilden. Zweckmäßigerweise wird dann die Federzunge 130 nicht von der Rückwand 129 des Gehäuses 101 beginnen, sondern vielmehr als gehäusefester federnder Lappen aus der Oberseite des Gehäuses 101 ausgebildet sein.

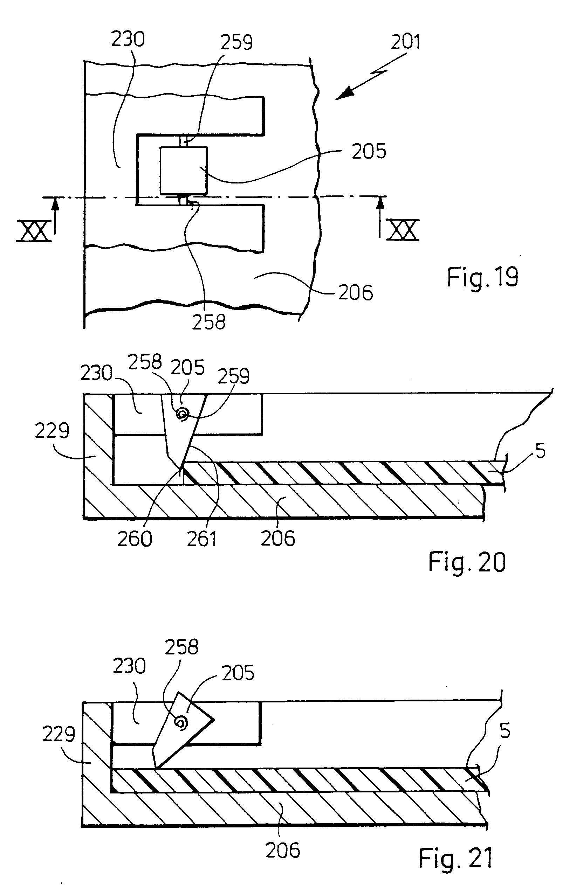

Die Fign. 19 bis 21 zeigen ein weiteres Ausführungsbeispiel der Erfindung. In einer in der Oberseite des Kartenlesers 201 ausgebildeten U-förmigen Zunge 230 ist eine Sperrklinke 205 über eine Welle 259 drehbar gelagert. Über eine mit der Sperrklinke 205 und der Zunge 230 verbundene Rückholfeder 258 ist die Ruhestellung der Sperrklinke 205 so definiert, daß sie mit einer Anlauffläche 261 in die Kartenbahn hineinragt. Beim Einschieben stößt die Karte 5 gegen die Anlauffläche 261 der Sperrklinke 205, wodurch diese bei weiterem Einschieben der Karte 5 aus der Kartenbahn herausgeschwenkt wird und auf der Kartenoberfläche mit einer Schneide 260 gleitet. Die Einschiebebewegung der Karte 5 ist beendet, wenn die auf dem Boden 206 gleitende Karte 5 an der Rückwand 229 des Kartenlesers 201 anschlägt. Zumindest wenn die Schneide 260 auf der Kartenoberfläche aufliegt, ist sie gegenüber der Drehachse 259 in Einschubrichtung versetzt, d.h., die Klinke steht schräg in Sperrstellung bezüglich der Ausziehrichtung, sodaß sie das Einschieben der Karte 5 nicht behindert, jedoch beim Herausziehen der Karte 5 aus dem Kartenleser 201 mit der Schneide 260 auf der Kartenoberfläche reibt. Das Herausziehen der Karte 5 resultiert dann in einem auf die Sperrklinke wirkenden Drehmoment, wodurch die Schneide 260 stärker in die Kartenoberfläche eingreift und die Karte 5 umso stärker an den Boden 206 des Kartenlesers angepreßt wird. Diese dem Herausziehen der Karte 5 entgegenwirkende Reibungskraft reicht aus, um eine eingeschobene Karte 5 in der Position des Informationsaustausches festzuhalten, aber ist andererseits dennoch so schwach, daß ein Herausziehen der Karte 5 durch den Benutzer gewährleistet ist. Aufgrund der versetzten Lagerung der Sperrklinke 205 bezüglich der Schneide 260 reicht das durch die Schwerkraft der Sperrkinke 205 hervorgerufene Drehmoment aus, um eine genügend große Reibungskraft zu erzeugen. Die Rückholfeder 258 verhindert ein Abheben der Schneide 260 von der Kartenoberfläche und verstärkt die Reibungskraft.

Die Erfindung betrifft einen Kartenleser mit einer Vorrichtung zum Festhalten einer in den Kartenleser einschiebbaren Karte in derjenigen Position, in der der Informationsaustausch zwischen Karte und Kartenleser stattfindet, wobei die Karte in der Position des Informationsaustausches durch ein Reibrichtgesperre, dessen Klemmhebel insbesondere als Daumenhebel ausgebildet ist, gehalten ist. Dabei werden ein im Gehäuse hin- und herbeweglicher Schieber und die auf ihm aufliegende Karte zum Informationsaustausch auf einen gehäusefesten Kontaktträger abgesenkt und durch das Reibrichtgesperre in dieser Lage gehalten.

## Patentansprüche

1. Kartenleser mit einer Vorrichtung zum Festhalten einer in den Kartenleser einschiebbaren Karte in derjenigen Position, in der der Informationsaustausch zwischen Karte und Kartenleser stattfindet, dadurch gekennzeichnet, daß die Karte (5) in der Position des Informationsaustausches durch ein Reibrichtgesperre, dessen Klemmhebel (3; 103) insbesondere als Daumenhebel ausgebildet ist, gehalten ist.

2. Kartenleser nach Anspruch 1, dadurch gekennzeichnet, daß der Klemmhebel (3; 103) im wesentlichen L-förmig ausgebildet ist.

3. Kartenleser nach Anspruch 2, dadurch gekennzeichnet, daß ein kurzer auf der Kartenoberfläche abrollbarer Arm (50; 150) des Klemmhebels (3; 103) mit einer Abrollkante (55; 155) ausgebildet ist.

4. Kartenleser nach einem der vorherigen Ansprüche, dadurch gekennzeichnet, daß der Klemmhebel (3; 103) an seinen Seitenflächen vorstehende Zapfen (51; 151) aufweist, über die der Klemmhebel (3; 103) drehbar und/oder verschiebbar geführt ist.

5. Kartenleser nach einem der Ansprüche 1 bis 4, dadurch gekennzeichnet, daß die Drehachse des Klemmhebels (3) verschiebbar ist.

6. Kartenleser nach Anspruch 4 oder 5, dadurch gekennzeichnet, daß die Führungen (44) für den Klemmhebel (3) im Schieber (2) angeordnet sind.

7. Kartenleser nach Anspruch 6, dadurch gekennzeichnet, daß die Führungen (44) an ihrem der Kartenbahn gegenüberliegenden Ende offen sind.

8. Kartenleser nach einem der vorherigen Ansprüche, dadurch gekennzeichnet, daß die Karte (5) durch eine im letzten Einschiebeabschnitt erfolgende Absenkbewegung zum Informationsaustausch auf die Kontakte abgesenkt ist.

9. Kartenleser nach einem der vorherigen Ansprüche, dadurch gekennzeichnet, daß in der Bahn des mit dem Schieber (2) bewegten Klemmhebels (3) für diesen am Gehäuse (1) ein Führungsabschnitt vorgesehen ist.

10. Kartenleser nach Anspruch 9, dadurch gekennzeichnet, daß der Führungsabschnitt in einer gehäusefesten Zungenfeder (30) angeordnet ist.

11. Kartenleser nach einem der vorherigen Ansprüche, dadurch gekennzeichnet, daß ein Arm (49) des Klemmhebels (3) in seiner Ausgangsstellung in Aussparungen (46) am Schieber (2) anliegt.

12. Kartenleser nach Anspruch 19, dadurch gekennzeichnet, daß Auflageflächen (47) in der Aussparungen (46) mit einer in Einschieberichtung der Karte (5) bezüglich der Kartenbahn ansteigenden Schräge ausgebildet sind.

13. Kartenleser nach einem der Ansprüche 11 oder 12, dadurch gekennzeichnet, daß in der Ruhestellung des Klemmhebels (3) die Auflageflächen (47) der Aussparungen (46) höher über der Kartenbahn angeordnet sind als Auflageflächen (44) der Zapfen (51) des Klemmhebels (3).

14. Kartenleser nach einem der Ansprüche 1 bis 4, dadurch gekennzeichnet, daß die Drehachse des Klemmhebels (103) ortsfest ist.

15. Kartenleser nach Anspruch 14, dadurch gekennzeichnet, daß die Karte (5) durch eine im letzten Einschiebeabschnitt erfolgende Absenkbewegung zum Informationsaustausch auf die Kontakte abgesenkt ist.

16. Kartenleser nach Anspruch 14 oder 15, dadurch gekennzeichnet, daß für den unverschiebbaren Klemmhebel (103) am Gehäuse ein Auslenkabschnitt vorgesehen ist.

17. Kartenleser nach Anspruch 16, dadurch gekennzeichnet, daß der Führungsabschnitt in Einschieberichtung der Karte (5) auf einem ersten zur Kartenbahn weisenden Abschnitt eine von der Kartenbahn wegweisende geneigte Schrägfläche (131) aufweist, die in weiterer Einschieberichtung in eine Aussparung (132) übergeht, in der das halbzylinderförmige Ende (152) des langen Arms (149) des Klemmhebels (103) drehbar ist.

18. Kartenleser nach Anspruch 16 oder 17, dadurch gekennzeichnet, daß ein Anschlag (133) den Auslenkabschnitt in weiterer Einschieberichtung begrenzt.

19. Kartenleser nach einem der Ansprüche 16 bis 18, dadurch gekennzeichnet, daß der Auslenkabschnitt in einer gehäusefesten Zungenfeder (130) angeordnet ist.

20. Kartenleser nach Anspruch 32 oder 33, dadurch gekennzeichnet, daß über am Schieber (102) angeordnete Anschläge (157) im letzten Einschiebeabschnitt der Karte (5) die Wirkung des Reibrichtgesperres ausgelöst ist.

21. Kartenleser nach einem der vorherigen Ansprüche, dadurch gekennzeichnet, daß das Gegenlager (4) auf der dem Reibrichtgesperre gegenüberliegenden Seite des Gehäuse (1;101) aus einem Werkstoff mit höherem Oberflächenreibwert als die Kartenoberfläche besteht.
